# DEMANDE DE BREVET EUROPEEN

(11) **EP 3 846 091 A1**
(43) Date de publication de la demande: **07.07.2021**
(21) Numéro de dépôt: 20218024.6
(22) Date de dépôt: 31.12.2020
(51) Int. Cl.: G06N 20/00

(54) **PROCEDE ET SYSTEME DE CONCEPTION D'UN MODELE DE PREDICTION**

(30) Priorité: 31.12.2019 FR 1915811
(71) Demandeur: BULL SAS, 78340 Les Clayes sous Bois (FR)
(72) Inventeur: SGHIOUER, Kaoutar, 60200 Compiègne (FR); HILIA, Mohamed, 92100 BOULOGNE BILLANCOURT (FR)
(74) Mandataire: Novagraaf Technologies

(57) **Abrégé**

L'invention porte sur un procédé (1000) de conception d'un modèle de prédiction mis en œuvre par un système (1) informatique, ledit procédé (1000) de conception comprenant :
- une étape de transmission (250,350,450), de données au client analyste et au client métier,
- une étape de réception (260,360,460), d'une instruction provenant de chacun des clients (20) analyste et client (30) métier et en ce qu'une étape suivante est initiée par le dispositif (10) de conception seulement si les deux instructions y autorisent ledit dispositif (10) de conception.

## Description

L'invention s'intéresse au domaine de l'intelligence artificielle, et plus particulièrement à l'utilisation d'algorithmes d'apprentissages pour la conception de modèles de prédiction. L'invention concerne un procédé de conception d'un modèle de prédiction, ledit procédé étant mis en œuvre par un système informatique. L'invention concerne en outre un système informatique comprenant un dispositif de conception de modèles.

### [Art antérieur]

L'apprentissage automatique est maintenant un outil démocratisé qui a la capacité de toucher toutes les entreprises quels que soient leurs domaines d'activités.

En effet, la vision par ordinateur, le traitement du langage naturel et la gestion d'ensembles démesurés de données permettent aux machines de surpasser les humains dans des tâches difficiles telles que le diagnostic du cancer, le suivi de performance d'infrastructure ou encore le renseignement. Dans le même temps, les coûts du matériel ont diminué et la mise en œuvre est devenue plus facile, ce qui a permis d'utiliser des modèles d'apprentissage pour améliorer la prise de décision humaine dans toutes les industries.

Pour atteindre un haut niveau de précision, les analystes développent des modèles d'apprentissage de type boîte noire sur de grands ensembles de données qui capturent des relations sous-jacentes complexes. Alors que ce processus a été la norme pendant de nombreuses années, des préoccupations surgissent concernant les biais, la sécurité, l'éthique et l'auditabilité de tels modèles. Ce besoin est tel qu'il a même été développé des procédés permettant de reconstruire les règles de décisions d'un modèle de type boite noir (US20190147369).

De façon à pallier cette méconnaissance des facteurs influant sur une recommandation, il commence à se développer des méthodes intégrant l'expertise métier pour regrouper les entrées du modèle dans des hiérarchies naturelles. Néanmoins ces initiatives ne permettent qu'une appréciation partielle de la construction du modèle d'apprentissage et ne répondent pas au besoin de transparence requis pour une utilisation sécurisée d'un modèle d'apprentissage pour une aide à la décision.

En effet, pour que les prédictions d'un modèle d'analyse soient utilisées dans des prises de décision, les utilisateurs doivent pouvoir faire confiance au modèle d'apprentissage. Pour faire confiance à un modèle, ils doivent comprendre comment il fait ses prédictions, c'est-à-dire que le modèle doit être interprétable. Néanmoins, une interprétation d'un modèle de prédiction est une tâche extrêmement complexe. En effet, les modèles de prédiction peuvent généralement reposer sur des dizaines de paramètres présentant des relations sous-jacentes complexes.

Ainsi, il existe un besoin pour des solutions de conception de modèle d'apprentissage permettant d'assurer les fondements d'une recommandation de même que l'auditabilité et la transparence du fonctionnement du système d'apprentissage automatique.

### [Problème technique]

L'invention a donc pour but de remédier aux inconvénients de l'art antérieur. En particulier, l'invention a pour but de proposer un procédé de conception d'un modèle de prédiction, ledit procédé étant rapide, précis et pouvant être réalisé en continu. La présente solution permet une adaptation facile et rapide des connaissances métiers dans les modèles algorithmiques développés. En outre, il est particulièrement adapté à la surveillance de processus industriels et plus particulièrement de système d'information.

L'invention a en outre pour but de proposer un système informatique pour la conception de modèle de prédiction construit de façon à proposer un large choix algorithmique et configuré de façon à assurer une vérification facilitée et contrôlée de la pertinence du modèle de prédiction conçu par un analyste donné, par un expert métier et éventuellement par un expert légal. Ainsi, l'invention propose un système informatique où les aspects d'éthique peuvent être pris en compte dès les phases de conception des modèles prédictifs.

### [Brève description de l'invention]

A cet effet, l'invention porte sur un procédé de conception d'un modèle de prédiction mis en œuvre par un système informatique, ledit système informatique comprenant : un dispositif de conception de modèles, un client analyste, un client métier ;
ledit dispositif de conception de modèles comportant un module de communication, une unité de traitement de données et une mémoire de données ;
ledit procédé de conception comprenant :
   - une étape de réception d'un jeu de données métier par le module de communication,
   - une étape de génération, par l'unité de traitement, d'au moins un jeu de données métier optimisé à partir du jeu de données métier,
   - une étape de conception, par l'unité de traitement, d'une pluralité de variables à partir du jeu de données métier,
   - une étape de génération, par l'unité de traitement et à partir de modèles d'apprentissage présélectionnés et de la pluralité de variables sélectionnées, d'au moins un modèle de prédiction, et
   - une étape d'évaluation, par l'unité de traitement, de la performance du modèle de prédiction, ladite évaluation comportant le calcul d'un indicateur de qualité de prédiction ;
ledit procédé étant caractérisé en ce que pour au moins deux étapes sélectionnées parmi les étapes de génération, de conception et de génération, le procédé comporte en outre :
   - une étape de transmission, par le module de communication, de données au client analyste et au client métier,
   - une étape de réception, par le module de communication, d'une instruction provenant de chacun des clients analyste et client métier et en ce qu'une étape suivante est initiée par le dispositif de conception seulement si les deux instructions y autorisent ledit dispositif de conception.

La présente solution permet une adaptation facile et rapide des connaissances métiers dans les modèles algorithmiques développés. En effet, face à la démocratisation des projets d'intelligence artificielle il a été nécessaire de développer une solution permettant une compréhension rapide de la donnée, de sa valeur et du résultat algorithmique découlant de sa prise en considération.

Ainsi, la présente invention se rapport à un procédé ou à un système de conception d'un modèle de prédiction depuis la phase de nettoyage d'un jeu de données jusqu'à la phase d'évaluation du modèle de prédiction proposé de façon à le rendre intelligible par les utilisateurs métiers.

Avantageusement une telle conception est collaborative et mise en œuvre au travers de plusieurs clients chacun apportant une validation nécessaire à la conception du modèle de prédiction. Ainsi, une plateforme basé sur une solution selon l'invention permettra une conception facilitée contrairement aux outils techniques de conception actuellement existant. En particulier, cette solution intègre des apports provenant des « aspects » métier directement entre chacune des phases de nettoyage, exploratoire, de modélisation ou encore d'évaluation, et ce, afin de générer un modèle de prédiction plus performant et plus rapidement pour un domaine métier donné.

Cela peut par exemple être rendu possible par la production d'un indicateur (de performance, de cohérence, d'adaptation ou métier) et par la possibilité d'afficher et/ou de modifier le modèle de prédiction en accord avec un aspect métier.

La présente invention fournit un procédé et une structure informatique permettant d'organiser la génération du modèle de prédiction basé sur l'apport d'un analyste données puis d'un expert métier à chacune des grandes étapes de développement d'un modèle de prédiction. La transition entre les étapes se fait après la validation de chacun des intervenants.

Ainsi, la présente invention donne une vision 360° au concepteur du modèle de prédiction qui lui permettra d'arriver à un résultat cela plus rapidement qu'avec des méthodes classiques et également lui permettra d'atteindre des niveaux de performance supérieurs aux méthodes standards.

**Selon d'autres caractéristiques optionnelles du procédé, ce dernier peut inclure facultativement une ou plusieurs des caractéristiques suivantes, seules ou en combinaison :**
- Les modèles d'apprentissages présélectionnés sont mémorisés au niveau d'une base de données à laquelle fait appel le dispositif de conception de modèle de prédiction. En particulier cette base de données peut comporter plusieurs dizaines d'algorithmes d'apprentissages, de préférence plusieurs centaines.
- Le procédé comporte une rétro-modification d'un jeu de données optimisé, une rétro-modification d'une pluralité de variables ou une rétro-modification d'un modèle de prédiction, en fonction des données contenues dans l'instruction du client métier et après validation du client analyste.
- Le procédé comporte une rétro-modification d'un modèle de prédiction en fonction de données générées lors de l'étape d'évaluation.
- Le procédé comporte des étapes de génération d'indicateurs graphiques permettant de modéliser les modèles de prédiction et les résultats associés, à un utilisateur métier, afin de favoriser l'implémentation des modèles de prédiction ; Ces indicateurs peuvent comporter entre outre les distributions des variables, des seuils, des valeurs extrêmes ou aberrantes pour experts métiers qui donnent des explications, et l'importance de ces variables dans la conception des modèles prédictifs.
- L'indicateur de qualité de prédiction est mesuré après chacune des étapes de génération, de conception et de génération. En particulier, le modèle est vérifié en phase d'apprentissage en appliquant des méthodes classiques de division du jeu de données en données d'apprentissage et de test. Ces données de test serviront à faire une première sélection de modèles adéquats avec l'objectif souhaité. Au départ des modèles standards sont utilisés tel que RandomForest, SVM, Regression, ACP.
- l'étape de transmission, par le module de communication, comporte aussi la transmission de données à un client contrôleur et qu'une étape suivante est initiée par le dispositif de conception seulement si une instruction du client contrôleur y autorise ledit dispositif de conception. Ainsi, il est possible de rassembler dans un procédé de conception d'un modèle de prédiction de nombreuses expertises. Le client contrôleur pourra par exemple comporter des règles prédéterminées permettant de mettre en évidence des variables ou des relations entre variables contraire à la règlementation (e.g. RGPD). En effet, il est nécessaire de gérer les données et leur exploitation en conformité avec la RGPD. En outre, le client contrôleur pourra comporter des règles prédéterminées permettant d'identifier des données à anonymisation ou à pseudonymiser.
- Le procédé comporte une étape de transmission de données aberrantes au client métier et une réception d'un statut pour chacune des données aberrantes transmises. En effet, l'interprétation des données aberrantes est d'une grande importance et la suppression de certaines données considérées à tort comme aberrante peut impacter très négativement les performances de prédiction. En effet, une fois qu'une donnée aberrante a été identifié il est nécessaire qu'une personne du métier soit en mesure de donner une signification ou de valider son exclusion.
- Le procédé comporte une étape d'imputation de valeurs au niveau de valeurs manquantes dans je jeu de données. En particulier ces valeurs sont imputées par le client métier. Ici, le rôle du métier dans cette étape est crucial tout comme dans le cas des valeurs aberrantes.
- l'étape de transmission, par le module de communication, de données au client analyste et au client métier, comporte la transmission de données sous la forme de :
   - nuages, tels que des nuages de point ou de mots,
   - histogrammes, et/ou
   - sélections tabulaires.

En particulier, le procédé selon l'invention pourra mettre en œuvre des méthodes visuelles (parcelles de dépendance partielle, espérance conditionnelle individuelle, effets locaux cumulés), analyse d'importance de caractéristiques, des modèles de substitution, ou encore le calcul de valeurs de Shapley.
- les variables sélectionnées à partir du jeu de données métier sont chacune transmises au client contrôleur et le client contrôleur retourne une valeur de pertinence pour chacune des variables sélectionnées. En particulier, le client contrôleur pourra identifier sur la base de règles prédéterminées des variables à privilégier ou au contraire à restreindre.
- les variables sélectionnées à partir du jeu de données métier sont chacune transmises au client métier et le client métier retourne une valeur de pertinence pour chacune des variables sélectionnées.
- l'étape de génération d'au moins un modèle de prédiction comporte la génération de plusieurs modèles de prédiction, de préférence construits via parallélisation, et les modèles de prédiction générés étant hiérarchisés en fonction de leurs performances. En effet, il est particulièrement avantageux de présélectionner plusieurs modèles (construits via parallélisation) et de les hiérarchiser avec pour chacun d'eux le calcul de plusieurs KPI. En outre, chacun des modèles de prédiction générés est associé à des valeurs d'indicateurs de performance.
- le jeu de données métier comporte des données générées par des capteurs de production industrielle et le jeu de données métier est utilisé par un modèle d'apprentissage automatique entrainé pour la surveillance d'un processus industriel.
- les capteurs de production industrielle comportent : des objets connectés, des capteurs machines, capteurs d'environnement et/ ou des sondes informatiques.
- le processus industriel est sélectionné parmi : un processus de production agroalimentaire, un processus de production manufacturière, un processus de synthèse chimique, un processus de conditionnement ou un processus de surveillance d'une infrastructure informatique.
- la surveillance du processus industriel correspond à la surveillance de la sécurité du processus industriel et comporte en particulier une maintenance prédictive, une détection de défaillance, une détection de fraude, et/ou une détection de cyberattaque.
- le client métier et/ou le client contrôleur transmettent en outre au dispositif de conception des instructions de modifications de la hiérarchie des modèles de prédiction générés. En effet, les départements métiers et legacy ont alors la possibilité d'ajuster le classement.
- Le procédé comporte une étape de génération d'une représentation des relations entre les variables utilisées par un modèle de prédiction. En effet, métiers et légacy pourront avoir besoin de corriger ces relations.
- Le procédé comporte une étape de mémorisation de chacun des modèles générés avec les instructions le concernant ainsi que les valeurs d'indicateur de performance lui étant associé. Un tel versionning des modèles de prédiction et des résultats IHM permet sur le long terme une économie de temps humain et la réduction des risques d'erreurs.

D'autres mises en œuvre de cet aspect comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

L'invention porte en outre sur système informatique de conception d'un modèle de prédiction, ledit système informatique comprenant : un dispositif de conception de modèles, un client analyste, un client métier ;
ledit dispositif de conception de modèles comportant un module de communication, une unité de traitement de données et une mémoire de données ;
ledit système informatique étant configuré pour :
   - réceptionner un jeu de données métier par le module de communication,
   - générer, par l'unité de traitement, au moins un jeu de données métier optimisé à partir du jeu de données métier,
   - concevoir, par l'unité de traitement, une pluralité de variables à partir du jeu de données métier,
   - générer, par l'unité de traitement et à partir de modèles d'apprentissage présélectionnés et de la pluralité de variables sélectionnées, au moins un modèle de prédiction, et
   - évaluer, par l'unité de traitement, la performance du modèle de prédiction, ladite évaluation comportant le calcul d'un indicateur de qualité de prédiction ;
ledit système informatique étant caractérisé en ce que pour au moins deux étapes sélectionnées parmi les étapes de génération, de conception et de génération, le système comporte en outre :
   - la transmission, par le module de communication, de données au client analyste et au client métier,
   - la réception, par le module de communication, d'une instruction provenant de chacun des clients analyste et client métier et en ce qu'une étape suivante est initiée par le dispositif de conception seulement si les deux instructions y autorisent ledit dispositif de conception

L'invention porte en outre sur un produit programme d'ordinateur comprenant des instructions de programme permettant de mettre en œuvre un procédé de conception d'un modèle de prédiction selon l'invention.

D'autres avantages et caractéristiques de l'invention apparaitront à la lecture de la description suivante donnée à titre d'exemple illustratif et non limitatif, en référence aux Figures annexées :
La figure 1 représente un schéma d'un système informatique pour la conception de modèles de prédiction selon l'invention.
La figure 2 représente une illustration schématique d'un procédé de conception de modèles de prédiction selon l'invention.
La figure 3 représente une illustration schématique d'un procédé de conception de modèles de prédiction selon un mode de réalisation de l'invention.
La figure 4 représente une illustration schématique d'une étape de génération d'au moins un jeu de données métier optimisé d'un procédé de conception de modèles de prédiction selon un mode de réalisation de l'invention.
La figure 5 représente une illustration schématique d'une étape de conception d'une pluralité de variables à partir du jeu de données métier optimisé d'un procédé de conception de modèles de prédiction selon un mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuer des combinaisons de matériel spécial et d'instructions informatiques.

### [Description de l'invention]

L'expression « **client analyste** », « **client contrôleur** » ou « **client métier** » correspond à un logiciel, stocké sur un dispositif informatique, de préférence différent du dispositif de conception selon l'invention, permettant d'analyser et de traiter une requête encodant des données.

Le terme « **côté client** » peut désigner des activités qui peuvent être effectuées sur un client dans un environnement de réseau client - serveur. En conséquence, on peut indiquer les activités qui peuvent être exécutées « du côté serveur » sur un serveur dans un environnement de réseau de serveur de client.

Les termes « **jeu de données métier** » correspond à une collection d'éléments connexes de données associées entre elles et accessibles individuellement ou de façon combinée, ou gérées comme une entité. Un jeu de données métier est généralement organisé en structure de données. Dans une base de données, par exemple, un jeu de données peut contenir des données dites « métier » (noms, salaires, coordonnées, chiffre des ventes, etc.). La base de données elle-même peut être considérée comme un jeu de données, de même que les corps de données qu'elle contient et qui sont associés à un type spécifique d'information, par exemple les données des ventes d'un service d'entreprise.

Le terme « **Donnée(s)** » correspond à un ou plusieurs fichiers ou une ou plusieurs valeurs de paramètres. Les valeurs de paramètres étant à destination des solutions de calculs intensifs, générées par des solutions de calculs intensifs ou encore générées à partir de données des solutions de calculs intensifs. Les données au sens de l'invention peuvent en particulier correspondre à des fichiers d'entrée de calculs accessibles et traitables par plusieurs solutions de calculs intensifs, des résultats de calculs accessibles et traitables par plusieurs solutions de calculs intensifs, des données de durée avant complétude des calculs, des valeurs issues de mesures de consommation énergétique, des valeurs de mesures d'utilisation de ressources (bande passante réseau, entrées-sorties stockage, mémoire, CPU, GPU...), des informations de facturation, des valeurs de paramètres système en particulier des systèmes mettant en oeuvre les solutions de calculs intensifs ou encore des valeurs de paramètres de d'infrastructures matérielles hébergeant les solutions de calculs intensifs.

L'expression « **données aberrantes** » correspond à une valeur ou une observation qui est « distante » des autres observations effectuées sur le même phénomène, c'est-à-dire qu'elle contraste grandement avec les valeurs « normalement » mesurées. Une donnée aberrante peut être due à la variabilité inhérente au phénomène observé ou bien elle peut aussi indiquer une erreur expérimentale, cette dernière est alors souvent exclue de la série de données.

Le terme « **apprentissage** » au sens de l'invention correspond à un procédé conçu pour définir une fonction f permettant de calculer une valeur de Y à partir d'une base de n observations labelisées (X1...n, Y1...n) ou non labelisées (X1...n). L'apprentissage peut être dit supervisé lorsqu'il se base sur des observations labelisées et non supervisé lorsqu'il se base sur des observations non labelisées. Dans le cadre de la présente invention, l'apprentissage est avantageusement utilisé pour la calibration du procédé et donc son adaptation à une infrastructure informatique particulière.

Le terme « **ressource** » au sens de l'invention correspond à des paramètres, des capacités ou des fonctions de dispositifs informatiques permettant le fonctionnement d'un système ou d'un processus applicatif. Un même dispositif informatique est associé généralement à plusieurs ressources. De même, une même ressource peut être partagée entre plusieurs processus applicatifs. Une ressource est généralement associée à un identifiant unique permettant de l'identifier au sein d'une infrastructure informatique. Par exemple, le terme « ressource » peut inclure : des disques réseaux caractérisés par des indicateurs de performance tels que par exemple par leurs entrées/sorties, la lecture/écriture sur des disques, des mémoires caractérisées par un indicateur de performance tel que le taux d'utilisation, un réseau caractérisé par sa bande passante, un processeur caractérisé par exemple par son utilisation (en pourcent) ou le taux d'occupation de ses caches, une mémoire vive caractérisée par la quantité allouée. On entend par « **utilisation des ressources** », la consommation d'une ressource par exemple par une application métier.

On entend par « **dispositif informatique** » tout dispositif informatique ou toute infrastructure informatique comprenant une ou plusieurs ressources matérielles et/ou logicielles configurées pour envoyer et/ou recevoir des flux de données et pour les traiter. Le dispositif informatique peut être un serveur informatique.

L'expression « **objet connecté** » au sens de l'invention, correspond à un objet électronique connecté, par une connexion filaire ou sans fil, à un réseau de transport de données, de manière que l'objet connecté puisse partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des tablettes, des dispositifs d'éclairage intelligents, des outils industriels ou encore des smartphones.

On entend par « **Fournisseurs de données** », tout capteurs (tels que des capteurs de production industrielle), sondes (telles que des sondes informatiques) ou programmes informatiques capables de générer des données de suivi de processus industriels. Ils peuvent aussi correspondre à des dispositifs informatiques tels que des serveurs gérant les données générées par des capteurs, des sondes ou des programmes informatiques.

On entend par « **modèle de prédiction** », tout modèle mathématique permettant d'analyser un volume de données et d'établir des relations entre des facteurs permettant l'évaluation de risques ou celle d'opportunités associées à un ensemble spécifique de conditions, afin d'orienter la prise de décision vers une action spécifique.

Le terme « **rétro-modification** » correspond à une action associée à une modification postérieure à l'analyse d'un résultat donné. A titre d'exemple, une rétro-modification peut être associée à une modification d'un type de modèle d'apprentissage par rapport à un jeu de données particulier, après analyse d'un ou de plusieurs indicateurs de performance associés audit modèle d'apprentissage.

L'expression « **passage en anomalie** » au sens de l'invention, peut correspondre à un instant où une métrique ou une pluralité de métriques (liées entre elles ou non) présentent un risque ou un résultat obtenu par calcul, de dépassement d'un seuil prédéterminé ou indicatif d'un risque de défaillance ou d'incident technique sur l'infrastructure informatique.

L'expression « **incident technique** » ou le terme « **défaillance** » au sens de l'invention, correspondent à un ralentissement ou un arrêt de fonctionnement d'une partie au moins de l'infrastructure informatique et de ses applications. Un incident technique peut être causé par une erreur réseau, un échec de processus ou encore une défaillance d'une partie du système.

L'expression « **infrastructure informatique** » au sens de l'invention correspond à un ensemble de structures informatiques (i.e. dispositifs informatiques) apte à faire fonctionner une application ou une chaine applicative. L'infrastructure informatique peut être un ou plusieurs serveurs, ordinateurs, ou encore contrôleurs industriels. Ainsi, l'infrastructure informatique peut correspondre à un ensemble de d'éléments comportant un processeur, une interface de communication et de la mémoire.

Par « **sonde** » ou « **sonde informatique** », on entend au sens de l'invention un dispositif, logiciel ou processus associé à un équipement qui permet d'effectuer, de gérer et/ou de faire remonter vers un équipement informatique des mesures des valeurs d'indicateurs de performance tels que des paramètres d'un système. Cela peut correspondre au sens large à des valeurs sur l'utilisation de ressources, des valeurs de paramètres d'exécution d'applications ou encore des valeurs de l'état de fonctionnement des ressources. Une sonde selon l'invention englobe donc également les logiciels ou processus capable de générer des journaux applicatifs ou des historiques des événements (« log file » en terminologie anglosaxonne). En outre, les sondes peuvent aussi correspondre à des capteurs physiques tels que des capteurs de température, d'humidité, de fuites d'eau, de consommation électrique, de mouvement, d'air conditionné, et de fumée.

L'expression « **indicateur de performance** » ou « métrique » désigné par l'acronyme « KPI » dans la suite de la description, au sens de l'invention, correspond à une valeur issue d'une méthode de calcul associé à un test donné. Une telle valeur a pour objet de caractériser la performance d'un modèle d'apprentissage pour un jeu de données particulier. Ainsi, une pluralité de KPI peut être produit en utilisant divers tests en fonction de la problématique à étudier (classification, régression, classement ou « ranking », regroupement ou « clustering », validation croisée etc.).

L'expression « valeur de **l'indicateur de performance** » ou « valeur de la métrique » au sens de l'invention, correspond à une valeur de mesure ou de calcul d'une propriété technique ou fonctionnelle d'un ou de plusieurs éléments d'une infrastructure informatique représentant l'état de fonctionnement de ladite infrastructure informatique.

On entend par « **traiter** », « **calculer** », « **exécuter** », « **déterminer** », « **afficher** », « **extraire** », « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

On entend par « **base de données** », une collection de données enregistrées sur un support accessible par ordinateur et organisées de façon à être facilement accessibles, administrées et mises à jour. Une base de données selon l'invention peut comprendre différents types de contenu sous forme de texte, d'images ou de nombres et peut ainsi correspondre à tout type de base de données connues telles que notamment une base de données relationnelle, une base de données distribuée ou encore une base de données orientée objet. La communication avec une telle base de données est assurée par un ensemble de programmes qui constituent le système de gestion de base de données fonctionnant selon un mode client/serveur, le serveur reçoit et analyse des requêtes émises par le client sous un format SQL, pour « structured language query » selon une terminologie anglo-saxonne, adapté pour communiquer avec une base de données.

Le terme « **corrélation** » au sens de l'invention correspond à une relation statistique, causale ou non, entre deux variables ou les valeurs de deux variables. Au sens le plus large, toute association statistique est une corrélation mais ce terme désigne par exemple la proximité entre deux variables et l'établissement d'une relation d'ordre. Le terme « causale » ou « causalité » au sens de l'invention correspond à une relation statistique causale entre deux variables ou les valeurs de deux variables. En particulier, une des variables est une cause qui est entièrement ou partiellement responsable de la valeur de l'autre variable au travers d'un effet. La valeur de première variable peut par exemple être considérée comme une cause d'une valeur (actuelle ou future) de la seconde variable. Que cela soit pour la corrélation ou la causalité, une ou plusieurs variables peuvent avoir une relation statistique avec une ou plusieurs autres variables.

En outre, une corrélation ou causalité indirect(e) au sens de l'invention correspond à l'existence d'une chaine de lien de corrélation ou de causalité entre une première variable et une autre variable. Par exemple, une première variable est corrélée à une seconde variable qui est elle-même corrélée à une troisième variable qui est enfin corrélée avec une autre variable.

Le terme « **pluralité** » au sens de l'invention correspond à au moins deux. De préférence cela peut correspondre à au moins trois, de façon plus préférée au moins cinq et de façon encore plus préférée au moins dix.

On entend par « **seuil prédéterminé** » au sens de l'invention une valeur maximale d'un paramètre, d'un indicateur ou d'une variable. Ces limites peuvent être réelles ou hypothétiques et correspondent généralement à un niveau au-delà duquel une baisse de performance peut survenir.

Par « **variable** » on entend au sens de l'invention une caractéristique d'une unité statistique que l'on observe et pour laquelle une valeur numérique ou une catégorie d'une classification peut être attribuée.

Par « **techniques de sélection** » on entend au sens de l'invention une suite finie d'opérations ou d'instructions permettant de calculer une valeur par l'intermédiaire de tests statistiques de type ANOVA, Test de l'information mutuelle entre deux variables aléatoires, Test du Chi², Tests de régression (e.g. régression linéaire, information mutuelle), SVM, ou élimination récursive, et permettant d'aboutir à un ensemble comprenant des variables pertinentes, notamment les meilleures variables ou les variables les plus pertinentes.

Dans la suite de la description, les mêmes références sont utilisées pour désigner les mêmes éléments.

Comme cela a été mentionné, l'apprentissage automatisé constitue une part majeure de la quatrième révolution industrielle. Ainsi, les processus industriels sont de plus en plus fréquemment améliorés via une intégration d'intelligence artificielle ou plus spécifique de modèles d'apprentissages automatisés capables de répondre à des problèmes techniques aussi variés qu'il y a de processus industriels.

En particulier, l'apprentissage automatisé se base sur une multitude de données pouvant provenir de plusieurs sources différentes et pouvant présenter ainsi une forte hétérogénéité. Ainsi, avec les méthodes de l'art antérieur, il est fréquent qu'une équipe de data scientistes soit formée au traitement des données et mette en place des processus de traitement de données.

Néanmoins, lorsque des sources des données sont diverses et varient dans le temps les méthodes de l'art antérieur ne sont pas réactives et peuvent causer des arrêts d'exploitation des processus industriels. En effet, lorsque l'apprentissage automatisé est utilisé pour le contrôle de processus industriel, un prétraitement non adapté de cette multitude de source de données peut entrainer une diminution de la réactivité des processus de contrôle ou pire un manque de sensibilité.

En outre, il existe déjà de nombreuses solutions pour concevoir des modèles de prédiction. Néanmoins, la plupart de ces solutions entrainent la conception de boites noires ou alors ne permettent pas d'encadrer de façon stricte une conception pluridisciplinaires d'un modèle de prédiction.

Les inventeurs ont donc proposé un procédé et un dispositif pour la conception de modèle de prédiction permettant d'encadrer une co-construction d'un tel modèle et établissant des jalons stricts empêchant la construction d'un modèle non validé par toutes les parties prenantes. En effet, les solutions collaboratives sont aujourd'hui permissives et peuvent engendrer en l'absence d'une attention particulière des partie prenante la création de modèles de prédiction non optimaux ou pire non éthiques.

Pour cela, la demanderesse propose un procédé et un dispositif permettant de contrôler une majorité des étapes clés dans la conception d'un modèle de prédiction.

L'invention porte donc sur un **procédé 1000 de conception d'un modèle de prédiction.**

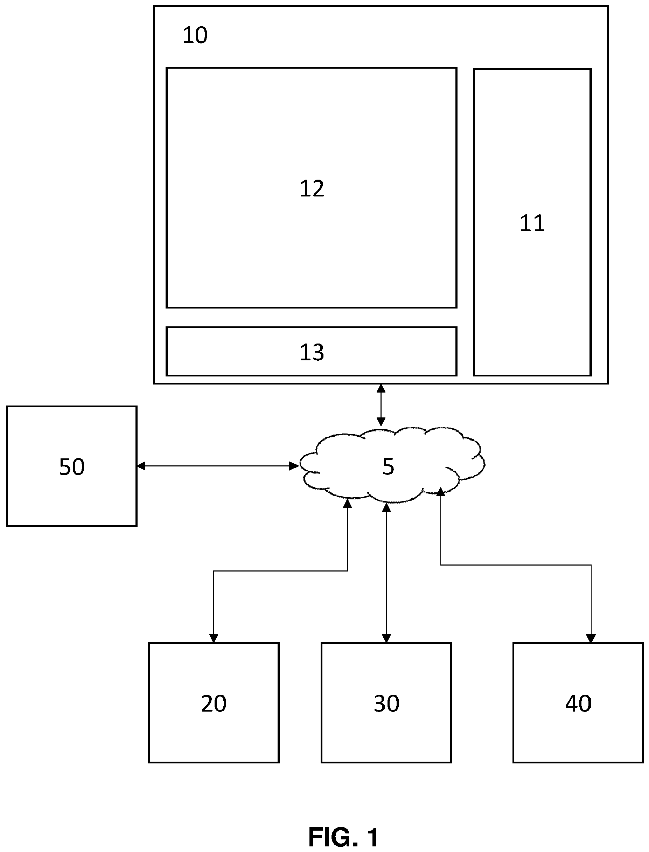

En particulier, comme cela est illustré à la **figure 1** et comme cela sera décrit par la suite, le procédé de conception d'un modèle de prédiction peut être mis en œuvre par un système 1 informatique.

De préférence, il pourra être mis en œuvre par un **dispositif de conception de modèle 10** configuré pour fonctionner au sein d'un système 1 informatique pouvant comporter des clients et des bases de données 50. Le dispositif de conception peut être un dispositif informatique de conception de modèle.

Le dispositif de conception de modèle 10 comporte un module 11 de communication, une unité 12 de traitement de données et une mémoire 13 de données.

Le dispositif de conception de modèle 10 comprend notamment **une unité 12 de traitement de données.** Le dispositif de conception de modèle 10, plus particulièrement l'unité 12 de traitement de données, est avantageusement configuré pour exécuter un procédé selon l'invention. Ainsi, l'unité 12 de traitement de données peut correspondre à tout agencement matériel et logiciel apte à permettre l'exécution d'instructions.

Le dispositif de conception de modèle 10 comprend notamment **une mémoire de données 13.** C'est la mémoire de données qui pourra stocker les instructions permettant à l'unité de traitement de données d'exécuter un procédé selon la présente invention.

La mémoire de données 13 peut comporter n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. La mémoire de données 13 peut comprendre une pluralité d'instructions ou de modules ou d'applications pour effectuer diverses fonctionnalités. Ainsi, la mémoire de données 13 peut mettre en œuvre des routines, des programmes, ou des structures de données de type matricielle. De façon préférée, la mémoire de données 13 peut comprendre un support lisible par un système informatique sous la forme d'une mémoire volatile, telle qu'une mémoire vive (RAM) et / ou une mémoire cache. La mémoire de données 13, comme les autres éléments, peut par exemple être connecté avec les autres composants du dispositif 10 via un bus de communication et une ou plusieurs interfaces de support de données.

En particulier, la mémoire de données 13 peut comporter un référentiel de modèles d'apprentissage. Ce référentiel de modèles d'apprentissage pourra correspondre à une pluralité de modèles de prédiction qui ont été préalablement générés (par exemple via des techniques d'apprentissage supervisée) chacun peut par exemple correspondre à une logique métier. Alternativement, ce référentiel de modèles d'apprentissage peut être mémorisé sur un support extérieur au dispositif 10 de conception mais sera accessible par exemple via le réseau 5.

Le dispositif de conception de modèle 10 est en particulier configuré pour fonctionner au sein d'un système 1 informatique pouvant comporter des clients et des bases de données 50. Ainsi, le dispositif 10 informatique peut aussi comporter un **module de communication 11.**

Un module 11 de communication selon l'invention est en particulier configuré pour échanger des données avec des dispositifs tiers. Le dispositif de conception 10 informatique communique avec d'autres dispositifs ou systèmes informatiques et notamment des clients 20, 30, 40 grâce à ce module 11 de communication. Le module de communication permet en outre, de transmettre les données sur au moins un réseau de communication et peut comprendre une communication filaire ou sans fil. De préférence, la communication est opérée par l'intermédiaire d'un protocole sans fils tel que wifi, 3G, 4G, et/ou Bluetooth. Ces échanges de données peuvent prendre la forme d'envoi et de réception de fichiers. Le module 11 de communication peut être en particulier configuré pour permettre la communication avec un terminal distant, dont un client 20,30,40. Un client est généralement, tout matériel et/ou logiciel apte à communiquer avec un dispositif conforme à l'invention.

Ainsi, le dispositif 10 selon l'invention peut exécuter l'invention en interaction avec des clients 20,30,40. Ces clients peuvent notamment correspondre aux client analyste, client métier et client contrôleur.

En outre, le module 11 de communication peut être en particulier configuré pour permettre la communication avec une base de données par exemple stockée sur un serveur informatique et accessible par le dispositif de conception.

Les différents modules ou référentiels sont distincts sur la figure 1 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique. En outre, le dispositif 10 informatique de conception et le client analyste peuvent être le même dispositif mais de préférence, le dispositif de conception correspond à un serveur informatique auquel peuvent se connecter les clients 20,30,40 décrits dans la présente demande de brevet.

Un dispositif 10 selon l'invention peut être intégré dans un système informatique et ainsi être apte à communiquer avec un ou plusieurs dispositifs externes tels qu'un clavier, un dispositif de pointage, un affichage, ou tout dispositif permettant à un utilisateur d'interagir avec le dispositif 10. Il faut comprendre que bien que non représenté, d'autres composants matériels et / ou logiciels pourraient être utilisé en conjonction avec un dispositif 10. Ainsi, dans un mode de réalisation de la présente invention, le dispositif 10 peut être couplé à une interface homme machine (IHM). L'IHM, comme déjà abordé, peut être utilisée pour permettre la transmission de paramètres aux dispositifs ou à l'inverse mettre à disposition de l'utilisateur les valeurs des données mesurées ou calculées par le dispositif. De façon générale, l'IHM est couplée de manière communicative avec un processeur et elle comprend une interface de sortie utilisateur et une interface d'entrée utilisateur. L'interface de sortie utilisateur peut comprendre une interface d'affichage et de sortie audio et divers indicateurs tels que des indicateurs visuels, des indicateurs audibles et des indicateurs haptiques. L'interface d'entrée utilisateur peut comprendre un clavier, une souris ou un autre module de navigation curseur tel qu'un écran tactile, un pavé tactile, une interface d'entrée de stylet et un microphone pour l'entrée de signaux audibles tels qu'un discours d'utilisateur, des données et des commandes qui peuvent être reconnues par le processeur.

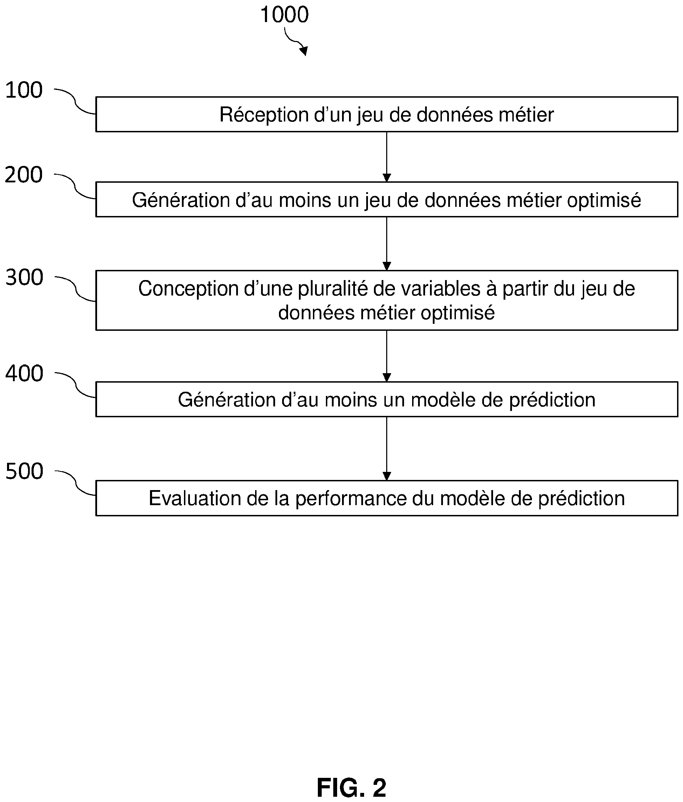

Comme cela est illustré à la **figure 2****,** un procédé 1000 de conception d'un modèle de prédiction selon l'invention comporte les étapes de réception 100 d'un jeu de données métier, de génération 200 d'au moins un jeu de données métier optimisé, de conception 300 d'une pluralité de variables à partir du jeu de données métier optimisé, de génération 400 d'au moins un modèle de prédiction, et d'évaluation 500 de la performance du modèle de prédiction.

Ainsi, un procédé 1000 de conception d'un modèle de prédiction selon la présente invention comporte une étape de **réception 100 d'un jeu de données métier.**

La réception d'un jeu de données métier, en particulier par le dispositif 10 de conception de modèles peut être faite au travers un module de communication 11.

Le jeu de données métier peut provenir de plusieurs sources différentes et présenter des formats ou des mises en forme différentes.

L'invention pourra s'appliquer quel que soit les données métier à traiter. Cela pourra par exemple correspondre à des données de capteurs provenant de mesure réaliser dans des bâtiments, sur des dispositifs informatiques ou sur des dispositifs motorisés ou encore sur des dispositifs robotisés. Les données pourront également correspondre à des données traitées provenant de calculs réalisés par des dispositifs informatiques tiers.

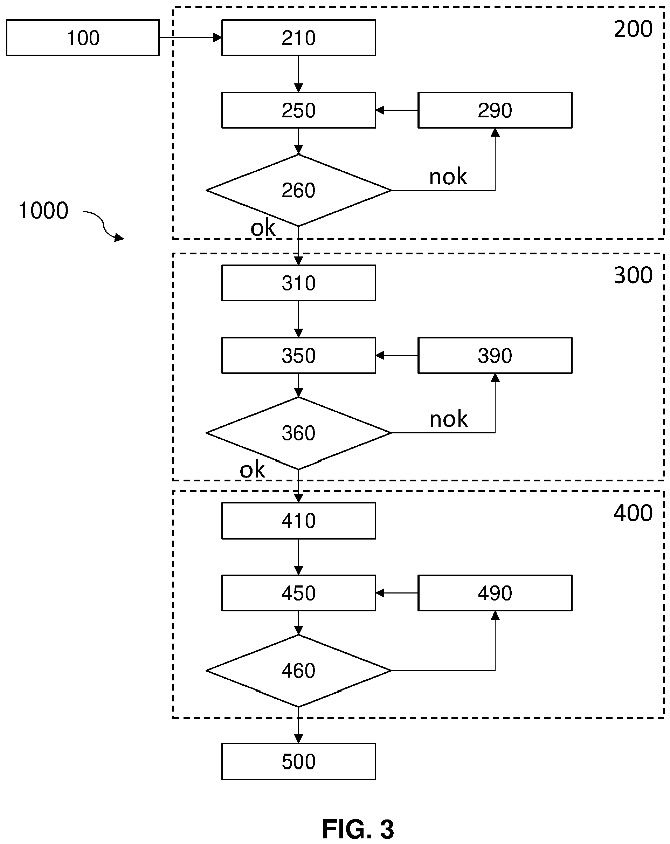

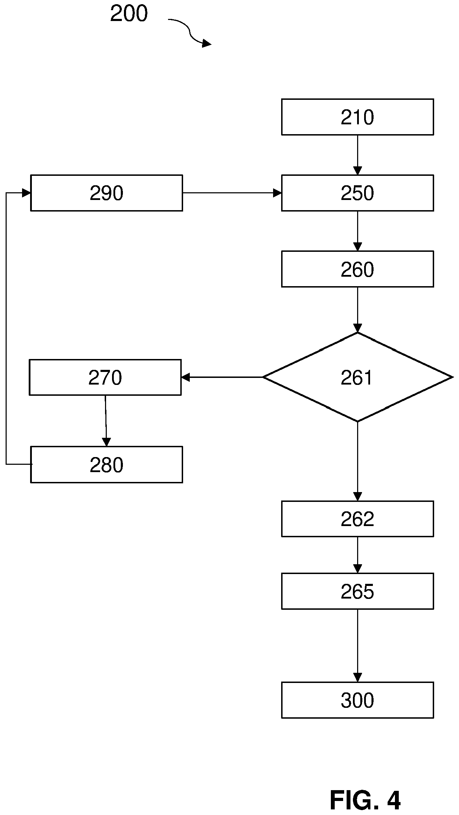

Un procédé 1000 de conception d'un modèle de prédiction selon la présente invention comporte ensuite une étape de **génération 200 d'au moins un jeu de données métier optimisé.** Cette étape de génération est détaillée à la **figure 3** et à la **figure 4****.**

La génération d'au moins un jeu de données métier optimisé est en particulier réalisée par le dispositif 10 de conception de modèles notamment selon des instructions mémorisées sur la mémoire de données 13 et exécutées par l'unité de traitement 12.

Comme cela est illustré à la **figure 3****,** un procédé 1000 de conception d'un modèle de prédiction selon l'invention peut comporter des étapes de génération 210 de premières données traitées, de transmission 250 des premières données traitées, de réception 260 d'une instruction provenant de chacun des client 20 analyste et client 30 métier et de 290 génération de nouvelles données traitées.

Ainsi, en référence à la figure 3, le procédé de conception selon l'invention comportera, après la réception d'un jeu de donnée, **une étape de génération 210 de premières données traitées.** Ces données seront de préférence automatiquement traitées par l'application de transformation prédéterminées mémorisée sur la mémoire de données et appliquée par l'unité de traitement.

Ces transformations pourront par exemple comporter : une normalisation, un rééchantillonnage en particulier un échantillonnage de candidats, une agrégation de données, un binning ou un Bucketing et/ou un recodage des variables.

En outre, le procédé pourra comporter une étape de détection des valeurs aberrantes dans le jeu de données par comparaison à des fonctions prédéterminées. En particulier, le procédé peut comporter une étape de calcul d'une valeur de corrélation entre les jeux de données et des lois de probabilité. Cette étape de calcul peut par exemple être mise en œuvre par le biais de l'exécution de programmes ou d'algorithmes de mesure d'adéquation.

De plus, il pourra comporter une étape d'interpolation pour la complétion des données manquantes prenant en compte la cohérence des données avec des tables de corrélation prédéfinies.

Ces premières données traitées sont ensuite transmises 250 par le module 11 de communication au client 20 analyste et au client 30 métier. Elles peuvent également être transmises au client 40 contrôleur.

Le dispositif de conception est ensuite configuré pour recevoir 260, par exemple via le module 11 de communication, une instruction provenant de chacun des client 20 analyste et client 30 métier. Comme cela est illustré à la **figure 4****,** le dispositif de conception traitera en outre ces instructions de façon à déterminer 261 si les client 20 analyste et client 30 métier autorisent le dispositif de conception à initier l'étape 300 de conception d'une pluralité de variables à partir du jeu de données métier optimisé.

En particulier, l'instruction pourra comporter un jeton d'autorisation qui sera vérifié par le dispositif de conception avant l'initiation « ok » des étapes ultérieures. Un procédé intégrant un élément d'identification ou d'authentification permet d'apporter de la robustesse au système et de certifier qu'un modèle issu d'un tel procédé aura été validé par un client métier et éventuellement un client contrôleur. Dans les systèmes de l'art antérieur il n'est pas possible de tracer les validations ni de les certifier rendant les modèles de prédictions générés incertains alors qu'avec la présente invention, les mécanismes en place permette de garantir la traçabilité des différentes opérations effectuées.

Si l'instruction ne comporte pas de validation, par exemple que le jeton d'autorisation est absent ou non vérifié alors les étapes ultérieures ne peuvent être enclenchées « nok » et le procédé de conception selon l'invention peut comporter une étape de génération 290 de nouvelles données traitées ou rétro modification.

En particulier, si l'autorisation n'est pas acquise, au moins une des instructions reçues pourra comporter des données et en particulier des propositions de modifications des premières données traitées. Par exemple, le client 30 métier pourra avoir transmis des instructions de suppression ou de complétion de certaines données.

En outre, le procédé peut comporter une étape 270 de transmission des instructions reçues par un client donné aux autres clients. Cela peut permettre une vérification des modifications par le ou les autres clients et ainsi améliorer la conception collaborative du modèle de prédiction.

En particulier, le dispositif de conception pourra recevoir des instructions de suppression de données provenant par exemple du client contrôleur. Une telle possibilité permet de rapidement nettoyer un jeu de données de façon à ce qu'il reste les réglementations en vigueur et/ou que son exécution permette la production de prédictions éthiques.

Ainsi, le procédé de conception selon l'invention pourra comporter une étape d'analyse 280 des instructions transmises de façon à en extraire des données à utiliser lors d'une étape de génération de nouvelles données traitées.

Ainsi, l'étape de génération 290 de nouvelles données traitées, ou rétro-modification, pourra avantageusement s'appuyer sur des données transmises notamment par le client métier.

Avantageusement, le procédé selon l'invention pourra comporter en outre une étape de détermination 262 de la qualité des données du jeu de données, comprenant le calcul 265 d'un indicateur de qualité. Cela peut correspondre à une vérification de l'adéquation de lois de probabilités aux données.

De façon préférée, le procédé selon l'invention comporte une vérification des lois de probabilités suivantes aux données :
- Lois continues symétriques : Normale, Logistique, Cauchy, Uniforme ;
- Lois continues asymétriques : Exponentielle, LogNormale, Gamma, Weibull ;
- Loi discrète : Poisson.

Pour cela un score est calculé entre les données et les lois étudiées. De façon préférée, un score est calculé pour déterminer l'adéquation des jeux de données à ces différentes lois aux moyens d'un square test, en mode automatisé/systématisé :
- Test d'Anderson-Darling ;
- Test de Cramer Von Mises ;
- Test de Kolmogorov-Smirnov ;
- Test du Chi².

Par exemple, un procédé selon l'invention pourra compoter une mise en œuvre de plusieurs analyses univariées, chacune des analyses univariées visant à étudier chacune des variables de façon indépendante. De façon préférée, les résultats de l'analyse univariée sont utilisés pour la génération d'une valeur d'indicateur de qualité.

Comme déjà mentionné, le procédé selon l'invention pourra comporter une analyse bi-variée qui avantageusement comportera une étape de calcul d'une valeur de corrélation entre deux variables.

En outre d'autres étapes peuvent être réalisée et consistent à imputer les valeurs manquantes et à sélectionner un algorithme d'imputation qui sera validé par un client « métier ». Ainsi, le procédé selon l'invention peut comporter une étape d'identification d'une variable comportant des données manquantes, une sélection d'au moins deux algorithmes d'imputation, un calcul de valeurs manquantes à partir desdits algorithme et une transmission des valeurs manquantes calculées à un client « métier ». Le procédé comporte alors une sélection d'un algorithme d'imputation en fonction d'un message envoyé par le client « métier ». De façon préférée, seul un algorithme d'imputation validé par un client « métier » pourra être utilisé pour compléter les valeurs manquantes d'une variable.

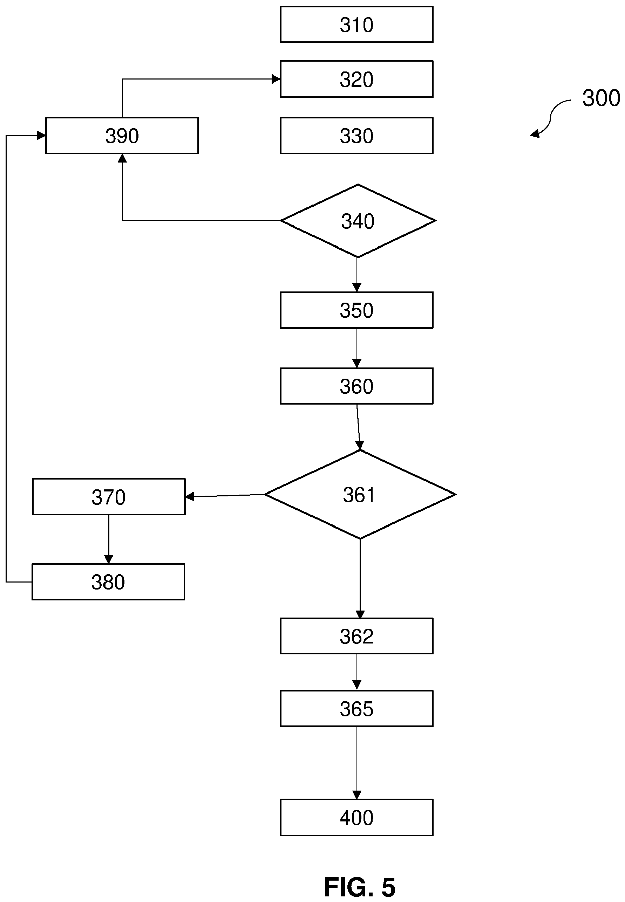

Un procédé 1000 de conception d'un modèle de prédiction selon la présente invention comporte une étape de **conception 300 d'une pluralité de variables à partir du jeu de données métier optimisé.** Cette étape de génération est détaillée à la figure 3 et à la **figure 5****.**

La génération d'au moins un jeu de données métier optimisé est en particulier réalisée par le dispositif 10 de conception de modèles notamment selon des instructions mémorisées sur la mémoire de données 13 et exécutées par l'unité de traitement 12.

Comme cela est illustré à la **figure 3****,** un procédé 1000 de conception d'un modèle de prédiction selon l'invention peut comporter des étapes de génération 310 d'un premier ensemble de variables, de transmission 350 du premier ensemble de variables, de réception 360 d'une instruction provenant de chacun des client 20 analyste et client 30 métier et de 390 génération d'un nouvel ensemble de variables.

Ainsi, en référence à la figure 3, le procédé de conception selon l'invention comportera, après la réception d'un jeu de donnée, une étape de génération 310 d'un premier ensemble de variables. Ce premier ensemble de variables est de préférence généré automatiquement par l'application d'algorithme de sélection prédéterminées mémorisés sur la mémoire de données et appliqués par l'unité de traitement.

Cette sélection peut par exemple comporter l'exécution de tests statistiques de type : ANOVA, Test de l'information mutuelle entre deux variables aléatoires, Test du Chi², Tests de régression (e.g. régression linéaire, information mutuelle), SVM (en anglais « support vector machine »), algorithmes génétiques ou élimination récursive. Cette sélection est configurée de façon à aboutir automatiquement à un ensemble comprenant des variables pertinentes, notamment les meilleures variables ou les variables les plus pertinentes. Alternativement cette sélection peut être une sélection aléatoire.

Comme cela est illustré à la **figure 5****,** la génération 310 d'un premier ensemble de variables pourra être suivie par le calcul 320 d'une valeur de performance pour chacune des variables dudit premier ensemble. En outre, le procédé pourra être suivi par le calcul 330 de la valeur d'une valeur de performance pour l'ensemble de variable. Cela permet d'obtenir automatiquement une valeur pouvant être utilisée lors de la vérification de la pertinence de variables identifiées. Ainsi, le dispositif de conception selon l'invention est configuré pour quantifier la pertinence des variables sélectionnées.

En outre, il est de préférence configuré pour établir une comparaison 340 de la valeur de performance de variable à une valeur seuil prédéterminée. Ainsi, le procédé de conception selon l'invention sera en mesure d'automatiquement écarter un ensemble de variable et de réinitier une étape de génération 390 d'un nouvel ensemble de variables, ou rétro modification. De même, le procédé peut comporter une étape de suppression des variables d'un ensemble de variable généré lorsque les variables sont redondantes. Par exemple, lorsque la valeur de corrélation entre deux variables dépasse un seuil prédéterminer, ces variables pourront être automatiquement classifiées comme probablement redondantes. Elles pourront alors faire l'objet d'un envoi automatisé au client analyste qui devra confirmer ou non que ces variables sont redondantes.

L'ensemble de variables est ensuite transmis 350 par le module 11 de communication au client 20 analyste et au client 30 métier. Il peut également être transmis au client 40 contrôleur.

Le dispositif 10 de conception est ensuite configuré pour recevoir 360, par exemple via le module 11 de communication, une instruction provenant de chacun des client 20 analyste et client 30 métier. Comme cela est illustré à la **figure 5****,** le dispositif de conception traitera en outre ces instructions de façon à déterminer 361 si les client 20 analyste et client 30 métier autorisent le dispositif 10 de conception à initier l'étape 400 de génération d'au moins un modèle de prédiction à partir de la pluralité de variables.

En particulier, l'instruction pourra comporter un jeton d'autorisation qui sera vérifié par le dispositif de conception avant l'initiation « ok » des étapes ultérieures.

Si l'instruction ne comporte pas de validation, par exemple que le jeton d'autorisation est absent ou non vérifié alors les étapes ultérieures ne peuvent être enclenchées « nok » et le procédé de conception selon l'invention peut comporter une étape de génération 390 d'un nouvel ensemble de variables, ou rétro modification.

En particulier, si l'autorisation n'est pas acquise, au moins une des instructions reçues pourra comporter des données et en particulier des propositions de modifications des valeurs de performance attribuées aux variables. Par exemple, le client 30 métier pourra avoir transmis 362 des instructions de modification d'une ou de plusieurs valeurs de performance. En effet, en fonction des connaissances métier, un expert pourra être en mesure de modifier 365 le poids qui doit être accordé à chacune des variables qui sera utilisées lors de l'étape de construction d'un modèle d'apprentissage. Il pourra par exemple augmenter ou diminuer la valeur de performance attribué à une variable.

En outre, le procédé peut comporter une étape 370 de transmission des instructions reçues par un client donné aux autres clients. Cela peut permettre une vérification des modifications par le ou les autres clients et ainsi améliorer la conception collaborative du modèle de prédiction.

En particulier, le dispositif de conception pourra recevoir des instructions de suppression de variables provenant par exemple du client contrôleur. Une telle possibilité permet de rapidement supprimer une variable dont l'utilisation dans un jeu de prédiction pourrait enfreindre des réglementations en vigueur et/ou entrainer des problématiques d'éthique.

Ainsi, le procédé de conception selon l'invention pourra comporter une étape d'analyse 380 des instructions transmises de façon à en extraire des données, telles que des valeurs de performance, à utiliser lors d'une étape de génération 390 d'un nouvel ensemble de variables. Ainsi, l'étape de génération 390 d'un nouvel ensemble de variables pourra avantageusement s'appuyer sur des données transmises notamment par le client métier.

Il y aura en particulier une étape de génération d'un nouveau sous ensemble de variables lorsque la valeur de performance d'une des variables sélectionnées est inférieure à une valeur seuil prédéterminée. De même, il y aura une étape de génération d'un nouveau sous ensemble de variables lorsque la valeur de performance du sous ensemble sélectionné, après modification des valeurs de performance selon les instructions des clients, est inférieure à une valeur seuil prédéterminée.

Dans cette étape, nous comprenons que le procédé pourra exécuter des méthodes connues permettant d'étudier les différentes variables du jeu de données optimisé de façon à sélectionner des ensembles de variables qui seront en mesure, ensemble, de bien prédire certains évènement / comportements.

Pour chacune des variable un poids sera calculé par le procédé et un poids (pertinence) global de l'ensemble de variable sera calculé.

Les ensembles de variables seront alors classiquement envoyés au client analyste mais également à un client métier et à un client contrôleur.

Ces deux derniers pourront modifier les « poids » ou valeurs de pertinence ayant été calculés de façon à indiquer l'intérêt ou non de prendre en compte plus ou moins fortement chacune des variables. Fort de ces nouvelles données d'entrées, le procédé recalculera des ensembles de variables et des « poids » qui seront à nouveaux soumis aux spécialiste métier et « juriste ». Cela jusqu'à atteindre une validation des deux clients.

Un procédé 1000 de conception d'un modèle de prédiction selon la présente invention comporte une étape de **génération 400 d'au moins un modèle de prédiction.** Cette étape de génération est détaillée à la figure 3.

La génération 400 d'au moins un modèle de prédiction en particulier réalisée par le dispositif 10 de conception de modèles notamment selon des instructions mémorisées sur la mémoire de données 13 et exécutées par l'unité de traitement 12.

Comme cela est illustré à la **figure 3****,** un procédé 1000 de conception d'un modèle de prédiction selon l'invention peut comporter des étapes de génération 410 d'une pluralité de modèle de prédiction, de transmission 450 de données de performance des modèles de prédiction générés, de réception 460 d'une instruction provenant de chacun des client 20 analyste et client 30 métier et de 490 génération d'une pluralité de nouveaux modèles de prédiction.

De retour à la figure 2 ou à la figure 3, un procédé 1000 de conception d'un modèle de prédiction selon la présente invention comporte également une étape **d'évaluation 500 de la performance du modèle de prédiction.**

L'évaluation est en particulier réalisée par le dispositif 10 de conception de modèles notamment selon des instructions mémorisées sur la mémoire de données 13 et exécutées par l'unité de traitement 12.

En particulier, l'étape d'évaluation peut comporter des validations croisées avec par exemple la mise en œuvre de méthodes telles que « Leave-One-Out Cross-Validation » en terminologie anglosaxonne ou « K-Fold ».

L'étape d'évaluation peut également comporter des analyses de régression avec par exemple la mise en œuvre de méthodes telles que la déviation moyenne absolue ou l'erreur quadratique moyenne (RMSE).

L'étape d'évaluation peut aussi classiquement comporter un calcul de coefficient de détermination R².

## Revendications

1. Procédé (1000) de conception d'un modèle de prédiction mis en œuvre par un système (1) informatique, ledit système (1) informatique comprenant : un dispositif (10) de conception de modèles, un client (20) analyste, un client (30) métier ;
ledit dispositif (10) de conception de modèles comportant un module (11) de communication, une unité (12) de traitement de données et une mémoire (13) de données ;
ledit procédé (1000) de conception comprenant :
- une étape de réception (100) d'un jeu de données métier par le module (11) de communication,
- une étape de génération (200), par l'unité (12) de traitement, d'au moins un jeu de données métier optimisé à partir du jeu de données métier,
- une étape de conception (300), par l'unité (12) de traitement, d'une pluralité de variables à partir du jeu de données métier,
- une étape de génération (400), par l'unité (12) de traitement et à partir de modèles d'apprentissage présélectionnés et de la pluralité de variables sélectionnées, d'au moins un modèle de prédiction, et
- une étape d'évaluation (500), par l'unité de traitement, de la performance du modèle de prédiction, ladite évaluation comportant le calcul d'un indicateur de qualité de prédiction ;
ledit procédé étant **caractérisé en ce que** pour au moins deux étapes sélectionnées parmi les étapes de génération (200), de conception (300) et de génération (400), le procédé comporte en outre :
- une étape de transmission (250,350,450), par le module (11) de communication, de données au client analyste et au client métier,
- une étape de réception (260,360,460), par le module (11) de communication, d'une instruction provenant de chacun des clients (20) analyste et client (30) métier et **en ce qu'**une étape suivante est initiée par le dispositif (10) de conception seulement si les deux instructions y autorisent ledit dispositif (10) de conception.

2. Procédé (1000) de conception d'un modèle de prédiction selon la revendication 1, **caractérisé en ce que** les modèles d'apprentissages présélectionnés sont mémorisés au niveau d'une base de données (50) à laquelle fait appel le dispositif de conception de modèle de prédiction.

3. Procédé (1000) de conception d'un modèle de prédiction selon l'une des revendications 1 ou 2, **caractérisé en ce qu'**il comporte une rétro-modification (290) d'un jeu de données optimisé, une rétro-modification (390) d'une pluralité de variables ou une rétro-modification d'un modèle de prédiction, en fonction des données contenues dans l'instruction du client (30) métier et après validation du client (20) analyste.

4. Procédé (1000) de conception d'un modèle de prédiction selon l'une quelconque des revendications 1 à 3, **caractérisé en ce qu'**il comporte des étapes de génération d'indicateurs graphiques permettant de modéliser les modèles de prédiction et les résultats associés, à un utilisateur métier, afin de favoriser l'implémentation des modèles de prédiction.

5. Procédé (1000) de conception d'un modèle de prédiction selon l'une quelconque des revendications 1 à 4, **caractérisé en ce que** l'indicateur de qualité de prédiction est mesuré après chacune des étapes de génération (200), de conception (300) et de génération (400).

6. Procédé (1000) de conception d'un modèle de prédiction selon l'une quelconque des revendications 1 à 5, **caractérisé en ce que** l'étape de transmission (250,350,450), par le module (11) de communication, comporte aussi la transmission de données à un client (40) contrôleur et qu'une étape suivante est initiée par le dispositif (10) de conception seulement si une instruction du client (40) contrôleur y autorise ledit dispositif (10) de conception.

7. Procédé (1000) de conception d'un modèle de prédiction selon l'une quelconque des revendications 1 à 6, **caractérisé en ce que** le procédé comporte une étape de transmission de données aberrantes au client (30) métier et une réception d'un statut pour chacune des données aberrantes transmises.

8. Procédé (1000) de conception d'un modèle de prédiction selon la revendication 6, **caractérisé en ce que** les variables sélectionnées à partir du jeu de données métier sont chacune transmises au client (40) contrôleur et le client (40) contrôleur retourne une valeur de pertinence pour chacune des variables sélectionnées.

9. Procédé (1000) de conception d'un modèle de prédiction selon la revendication 7, **caractérisé en ce que** les variables sélectionnées à partir du jeu de données métier sont chacune transmises au client (40) contrôleur et le client (40) contrôleur retourne une valeur de pertinence pour chacune des variables sélectionnées.

10. Procédé (1000) de conception d'un modèle de prédiction selon l'une quelconque des revendications 1 à 9, **caractérisé en ce que** les variables sélectionnées à partir du jeu de données métier sont chacune transmises au client (40) métier et le client (40) métier retourne une valeur de pertinence pour chacune des variables sélectionnées.

11. Procédé (1000) de conception d'un modèle de prédiction selon l'une quelconque des revendications 1 à 10, **caractérisé en ce que** l'étape de génération (400) d'au moins un modèle de prédiction comporte la génération de plusieurs modèles de prédiction, de préférence construits via parallélisation, et les modèles de prédiction générés étant hiérarchisés en fonction de leurs performances.

12. Procédé (1000) de conception d'un modèle de prédiction selon l'une quelconque des revendications 1 à 11, **caractérisé en ce que** le client (30) métier transmet en outre au dispositif de conception des instructions de modifications de la hiérarchie des modèles de prédiction générés.

13. Procédé (1000) de conception d'un modèle de prédiction selon l'une quelconque des revendications 1 à 12, **caractérisé en ce que** le jeu de données métier comporte des données générées par des capteurs de production industrielle et **en ce que** le jeu de données métier est utilisé par un modèle d'apprentissage automatique entrainé pour la surveillance d'un processus industriel, de préférence ledit processus industriel est sélectionné parmi : un processus de production agroalimentaire, un processus de production manufacturière, un processus de synthèse chimique, un processus de conditionnement ou un processus de surveillance d'une infrastructure informatique.

14. Procédé (1000) de conception d'un modèle de prédiction selon la revendication 13, **caractérisé en ce que** les capteurs de production industrielle comportent : des objets connectés, des capteurs machines, capteurs d'environnement et/ ou des sondes informatiques.

15. Procédé (1000) de conception d'un modèle de prédiction selon l'une quelconque des revendications 1 à 14, **caractérisé en ce qu'**il comporte une étape de génération d'une représentation des relations entre les variables utilisées par un modèle de prédiction.
